Europäisches Patentamt

European Patent Office

Office européen des brevets

(19)

(11) Veröffentlichungsnummer: **0 384 475 B1**

## (12) EUROPÄISCHE PATENTSCHRIFT

(45) Veröffentlichungstag der Patentschrift: **01.06.94**

(51) Int. Cl.5: **H04L 9/32**

(21) Anmeldenummer: **90103480.1**

(22) Anmeldetag: **22.02.90**

(54) **Verfahren zur Identifikation von Teilnehmern sowie zur Generierung und Verifikation von elektronischen Unterschriften in einem Datenaustauschsystem.**

(30) Priorität: **24.02.89 EP 89103290**

(43) Veröffentlichungstag der Anmeldung:
**29.08.90 Patentblatt 90/35**

(45) Bekanntmachung des Hinweises auf die Patenterteilung:
**01.06.94 Patentblatt 94/22**

(84) Benannte Vertragsstaaten:
**AT BE CH DE ES FR GB IT LI NL SE**

(56) Entgegenhaltungen:

**PROCEEDINGS OF EUROCRYPT '88, Davos, 25. - 27. Mai 1988, Seiten 77-84, Springer-Verlag, Berlin, DE; T. BETH: "Efficient zero-knowledge identification scheme for smart cards"**

**IEEE COMMUNICATIONS, Band 25, Nr. 7, Juli 1987, Seiten 73-79, IEEE, New York, US; J.K. OMURA et al.: "A computer dial access system based on public-key techniques"**

(73) Patentinhaber: **Schnorr, Claus Peter, Prof. Dr.**
**Frankturter Strasse 81**
**D-61231 Bad Nauheim(DE)**

(72) Erfinder: **Schnorr, Claus Peter, Prof. Dr.**
**Frankturter Strasse 81**
**D-61231 Bad Nauheim(DE)**

(74) Vertreter: **Fuchs, Franz-Josef, Dr.-Ing. et al**
**Postfach 22 13 17**
**D-80503 München (DE)**

**Beschreibung**

Die Erfindung betrifft Verfahren zur Identifikation von Teilnehmern sowie zur Generierung und Verifikation von elektronischen Unterschriften nach den Merkmalen der Oberbegriffe der Ansprüche 1, 2, 3, 10 und 11.

Wichtige Voraussetzungen für die Datensicherheit in modernen Kommunikationssystemen sind:

a) Die gegenseitige Identifikation der am System beteiligten Kommunikationspartner

b) die Authentifikation der übertragenen und gespeicherten Daten

c) die Verschlüsselung der übertragenen und gespeicherten Daten und

d) die Prüfung der Urheberschaft der übertragenen Daten.

Ein hohes Maß an Datensicherheit ist bekanntlich nur durch den Einsatz kryptographischer Verfahren zu erreichen, die eine Identifikation und Authentizitätsprüfung von Nachrichten, Teilnehmern und Geräten zweifelsfrei ermöglichen. Unter Kryptographie wird im allgemeinen eine Verschlüsselung der Daten zur Geheimhaltung verstanden. Neben dieser zweifellos wichtigen Kryptofunktion gewinnen aber zunehmend andere Funktionen, insbesondere die Prüfung der Authentizität und Urheberschaft oder die Erzeugung elektronischer Unterschriften an Bedeutung.

Zur Realisierung kryptographischer Funktionen können symmetrische oder asymmetrische Verschlüsselungsalgorithmen verwendet werden. Beim symmetrischen Algorithmus, z.B. dem DES-Algorithmus (Data Encryption Standard) werden zum Ver- und Entschlüsseln gleiche Schlüssel verwendet. Symmetrische Schlüsselsysteme eignen sich vor allem dann, wenn größere Datenmengen mit hoher Geschwindigkeit übertragen werden müssen. Nachteile ergeben sich dagegen durch ein relativ schwieriges Schlüssel-Management, weil Sender und Empfänger den gleichen Schlüssel haben müssen und zur Übertragung des jeweils verwendeten Schlüssels ein sicherer Kanal benötigt wird.

Bei asymmetrischen Schlüsselsystemen werden zum Ver- und Entschlüsseln unterschiedliche Schlüssel verwendet, derart, daß z.B. der Schlüssel zum Verschlüsseln öffentlich und der Schlüssel zum Entschlüsseln geheim ist. Letzterer ist nur dem Empfänger bekannt. Ein unsymmetrisches Schlüsselsystem ist z.B. der nach den Erfindern Rivest, Shamir und Adlemann benannte RSA-Algorithmus, der einen vergleichsweise hohen technischen Aufwand und je nach verwendeter Schlüssellänge entsprechend lange Durchlaufzeiten benötigt, aber durch das besondere Schlüsselsystem hohen Sicherheitsanforderungen genügt. Ideal geeignet ist das asymmetrische Schlüsselsystem zum Signieren einer zu übertragenden Nachricht. Die zu unterschreibende Nachricht wird dabei mit dem Geheimschlüssel des Unterschreibenden verschlüsselt und kann von jedem, der den öffentlichen Schlüssel kennt, entschlüsselt werden. Diese "Elektronische Unterschrift" beinhaltet nicht nur das persönliche Merkmal (Besitz des Geheimschlüssels) des Unterschreibenden, sondern bezieht auch den unterschriebenen Text mit ein, mit der Folge, daß jede Änderung des Textes vom Empfänger erkannt wird. Nachricht und Unterschrift sind damit über den Schlüssel-Algorithmus unveränderbar verknüpft.

Der Einsatz moderner kryptographischer Mittel hängt eng mit der Einführung der sogenannten multifunktionalen Prozessor-Chipkarte zusammen. Die Prozessorchipkarte ermöglicht nicht nur vielseitige Anwendungen, sondern ist auch dafür vorgesehen, die notwendigen Sicherheitskomponenten (Geheimschlüssel und Kryptoalgorithmus) aufzunehmen, um eine Identifikation des Benutzers und eine sichere Authentifikation der Karte und der ausgetauschten Nachricht zu gewährleisten.

Die derzeit bekannten Algorithmen für elektronische Unterschriften, insbesondere der RSA-Algorithmus (siehe US-A 4 405 829) und der von A.Fiat und A.Shamir entwickelte Algorithmus (EP A 0 252 499) erfordern entweder einen hohen Speicheraufwand oder benötigen, sofern sie überhaupt im Chip untergebracht werden können, wegen umfangreicher und komplizierter Rechenoperationen, insbesondere Multiplikationen, sehr viel Zeit, so daß sie für den Einsatz in Chipkarten nur bedingt geeignet sind.

Der vorliegenden Erfindung liegt deshalb die Aufgabe zugrunde, Verfahren zur gegenseitigen Identifikation von Teilnehmern eines Datenaustauschsystems und zur Generierung von Unterschriften anzugeben, die bei im wesentlichen gleichen Sicherheitsgarantien aufgrund einfacherer Rechenoperationen im Vergleich zu bekannten kryptographischen Verfahren kürzere Laufzeiten ermöglicht.

Diese Aufgabe wird erfindungsgemäß durch die Merkmale der Ansprüche 1 bzw. 2 und 3 gelöst. Vorteilhafte Ausgestaltungen der Erfindung sind in den übrigen Unteransprüchen angegeben. Dies gilt insbesondere für den Anspruch 4, demzufolge die Verfahren durch in einem Vorprozeß errechnete und zwischengespeicherte diskrete Logarithmen beschleunigt werden können, wobei einmal benutzte Werte in einem Erneuerungsprozeß mit anderen diskreten Logarithmen in zufälliger Weise kombiniert werden. Ein Verfahren zur Verifizierung einer gemäß Anspruch 2 generierten Unterschrift ist in Anspruch 10 angegeben.

Das bei der Erfindung zu lösende Problem besteht in der Schwierigkeit, den diskreten Logarithmus zu berechnen. Auf dieser Grundlage bauen auch andere, bereits bekannte asymmetrische Kryptoverfahren auf:

EP 0 384 475 B1

(siehe T. ELGAMAL, "A Public Key Cryptosystem and a Signature Scheme Based on Discrete Logarithms", IEEE Transactions on Information Theory 31 (1985), 469 - 472; D. CHAUM, J.H EVERTSE, J. van de GRAAF, J.: "An Improved Protocol for Demonstration Possession of Discrete Logarithms and some Generalizations," Proceedings of Eurocrypt 87, Lecture Notes in Computer Science 304, (1988), 127 - 141; T. BETH: "Efficient Zero-Knowledge Identification Scheme For Smart Cards", Proceedings of Eurocrypt '88, 25-27 Mai 1988, Seiten 77-84). Beim Identifikationsverfahren nach T. Beth wird der öffentliche Schlüssel des sich identifizierenden Teilnehmers mit dem von ELGAMAL entwickelten Unterschriften-Schema gesichert, wobei die Unterschrift mit einem Fiat-Shamir-artigen Identifikationstest verknüpft wird. Bei diesem bekannten Identifikationsverfahren wird die Geheimhaltung sicherheitsrelevanter Komponenten dadurch erreicht, daß dem zu prüfenden Teilnehmer nur die Exponentalwerte dieser Komponenten zur Verfügung stehen, während die Rechenoperationen bei dem zu identifizierenden Teilnehmer mit logarithmischen Werten dieser Komponenten, die nur diesem Teilnehmer bekannt sind, durchgeführt werden.

Die vorliegende Erfindung hat gegenüber den bekannten Kryptoverfahren den Vorteil, daß die Rechenoperationen in der Chipkarte vergleichsweise einfacher durchgeführt werden können. Dies geschieht insbesondere durch den genannten Vorprozeß. Dieser Vorprozeß kann auch mit den genannten Kryptosystemen von ELGAMAL, CHAUM-EVERTSE-van de GRAAF und BETH kombiniert werden. Darüber hinaus können durch die vorliegende Erfindung besonders kurze Unterschriften erzeugt werden.

Im folgenden werden Einzelheiten der erfindungsgemäßen Verfahren, teilweise anhand der Zeichnung, näher erläutert. In der Zeichnung zeigen

FIG 1    den prinzipiellen Ablauf bei der erfindungsgemäßen Identifizierung eines Teilnehmers,
FIG 2    die erfindungsgemäßen Verfahrensschritte bei der Generierung einer Unterschrift für eine zu übertragende Nachricht,
FIG 3    die Prüfung der gemäß FIG 2 erzeugten Unterschrift,
FIG 4    die erfindungsgemäßen Verfahrensschritte bei der Generierung einer verkürzten Unterschrift,
FIG 5    die Prüfung der gemäß FIG 4 erzeugten verkürzten Unterschrift.

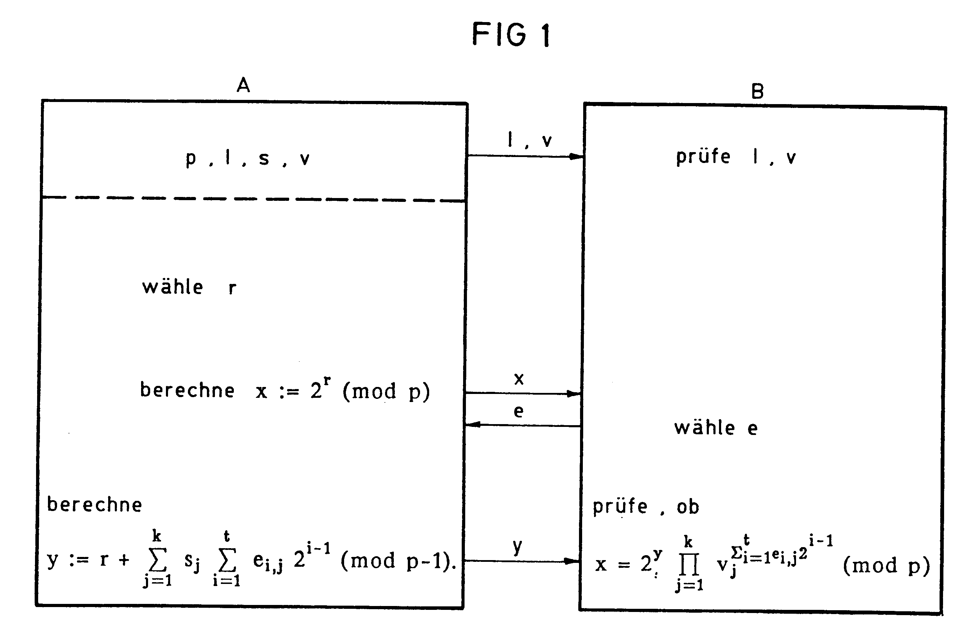

Anhand des in FIG 1 dargestellten Prinzipbildes soll als Beispiel gezeigt werden, wie ein Teilnehmer A, beispielsweise eine diesem Teilnehmer gehörende Chipkarte, gegenüber einem Teilnehmer B, beispielsweise einem Chipkarten-Terminal, seine Identität nachweist. Bei einem mit Chipkarten arbeitenden Datenaustauschsystem werden die jeweils benutzerbezogenen Chipkarten von einem oder gegebenenfalls mehreren Geheimzentren (Regierungsvertretungen, Kreditkartengesellschaften oder dergleichen) ausgegeben, wobei die Ausgabe der Chipkarten erst dann erfolgt, wenn die Identität des jeweiligen Benutzers geprüft worden ist. Das Zentrum bereitet dann für einen qualifizierten Benutzer einen persönlichen Identifikationsstring I vor (Name, Adresse, ID-Nummer, usw.), fügt diesem Identifikationsstring I den benutzerbezogenen öffentlichen Schlüssel zu, der möglicherweise vom Benutzer selbst erzeugt worden ist und veröffentlicht das aus Identifikationsstring I und öffentlichem Schlüssel v gebildete Paar in einer öffentlich zugänglichen Liste. Das Zentrum sieht den geheimen Schlüssel s selbst nicht und kann ihn deshalb auch nicht verraten. Der Identifikationsstring I, die öffentlichen und geheimen Schlüssel v, s sowie eine vereinbarte Primzahl p werden vor der Kartenausgabe in der Chipkarte gespeichert.

Anstelle des Gebrauchs einer öffentlichen Liste kann das Zentrum jedes Paar I, v, unterzeichnen. Diese Unterschrift ist in der Chipkarte gespeichert und kann mit Hilfe des öffentlichen Schlüssels des Zentrums leicht nachgeprüft werden. Nachdem die Chipkarten und/oder die öffentliche Liste ausgegeben sind, ist keine weitere Interaktion mit dem Zentrum notwendig, weder zur Erzeugung noch zur Prüfung von Unterschriften und Identitäten.

Die Identifikation beginnt mit einer sogenannten Initiation. Dabei sendet der Teilnehmer A bzw. die Chipkarte einen Identifikationsstring I und den öffentlichen Schlüssel v an den die Identität verifizierenden Teilnehmer B bzw. an das zugehörige Terminal. Im Unterschied zu bekannten Kryptoverfahren wird der öffentliche Schlüssel im Terminal verifiziert, d.h. das Terminal prüft den Zusammenhang zwischen dem öffentlichen Schlüssel v und dem Identifikationsstring I und kontrolliert auf diese Weise die Unterschrift des Zentrums. Der öffentliche Schlüssel $v = (v_1 \ldots v_k)$ steht im logischen Zusammenhang mit dem geheimen Schlüssel $s = (s_1 \ldots s_k)$ und ist definiert als

$$v_j = 2^{-s_j} \pmod{p} \text{ für } j = 1,\ldots,k .$$

Dabei ist p eine Primzahl, die mindestens 512 Bit lang ist. Sobald der geheime Schlüssel s gewählt ist, kann man den entsprechenden öffentlichen Schlüssel v leicht berechnen. Der umgekehrte Prozeß, den geheimen Schlüssel s aus dem öffentlichen Schlüssel v zu berechnen, ist deshalb nicht durchführbar, weil die Berechnung des diskreten Logarithmus modulo p für derart große Primzahlen p außer Reichweite heutiger Computer und Algorithmen ist. Die Komponente $s_j$ des geheimen Schlüssels ist der diskrete

3

Logarithmus modulo p von $v_j^{-1}$, d.h.

$$s_j = - \log_2 v_j \pmod{p-1} \text{ für } j = 1,\ldots,k .$$

Alle diskreten Logarithmen beziehen sich auf die Gruppe $\mathbb{Z}_p^*$(die multiplikative Gruppe modulo p) und, sofern nicht anders vermerkt, auf die Basis 2. Weil die Ordnung der Gruppe $\mathbb{Z}_p^*$ p - 1 ist, nimmt der diskrete Logarithmus die Werte 1, 2, ... p - 1 an.

Anstelle der endlichen Gruppen, die durch Restbildung modulo p entstehen, können auch andere endliche Gruppen zur Bildung des diskreten Logarithmus verwendet werden, wie zum Beispiel der Einheitengruppe $\mathbb{Z}_n^*$ der zur Zahl n primen Restklassen, der Einheitengruppe endlicher Körper, der elliptischen Kurve über einem endlichen Körper, usw.. Zur Übertragung des Verfahrens auf eine beliebige endliche Gruppe ist die Kenntnis der Gruppenordnung nicht erforderlich. Es reicht z.B. aus, mit den diskreten Logarithmen der Größenordnung $2^{140}$ zu rechnen.

Nach der Initiierung erfolgt als zweiter Schritt beim Teilnehmer A die Generierung einer Zufallszahl r

$$r \in (1, \ldots, p-1),$$

aus welcher der folgende Exponentialwert

$$x: = 2^r \pmod p$$

berechnet wird. Der umgekehrte Rechenprozeß, d.h. aus dem x-Wert die Zufallszahl r zu berechnen, ist sehr schwierig, sofern p hinreichend groß ist. Der Teilnehmer B hat deshalb praktisch keine Möglichkeit, die Zufallszahl r in der ihm zur Verfügung stehenden Zeit auszuforschen. Dieser beim Teilnehmer A berechnete x-Wert wird an den Teilnehmer B, d.h. an das Terminal übertragen. Die Zufallszahl r ist, wie der bereits vorher erwähnte Geheimschlüssel $s_j$, ein diskreter Logarithmus. Daraus folgt, daß auf der Chipkarten-Seite mit diskreten Logarithmen, auf der Gegenseite d.h. im Terminal des Teilnehmers B mit dem jeweiligen Exponentialwert gerechnet wird.

Die Generierung der Zufallszahl r und der daraus abgeleiteten Exponentialfunktion

$$x: = 2^r \pmod p$$

kann nun in vorteilhafter Weise durch einen Vorprozeß beschleunigt werden, der in der Chipkarte einen Vorrat von mehreren Paaren, bestehend aus je einer Zufallszahl r und dem dazugehörigen x-Wert, bereitstellt und erneuert. Dieser Vorrat kann in der Chipkarte selbst angelegt oder von außen in die Chipkarte geladen werden. Bei einem initiierten Identifikations-Prozeß kann deshalb sofort auf eines dieser Paare zugegriffen werden, so daß der jeweilige x-Wert unverzüglich an den Teilnehmer B übertragen werden kann.

Im nächsten Schritt sendet nun der Teilnehmer B eine zufällige Bitfolge

$$e = (e_{1,1},\ldots,e_{t,k}) \in \{0,1\}^{kt}$$

an den Teilnehmer A bzw. an die Chipkarte.

Nach Empfang der zufälligen Bitfolge e sendet die Chipkarte eine von den Bits der zufälligen Bitfolge e abhängige Linearkombination der bei ihr gespeicherten geheimen Schlüssel $s_j$, addiert dazu die aktuelle Zufallszahl r und sendet den so gebildeten Zahlenwert y

$$y: = r + \sum_{j=1}^{k} s_j \sum_{i=1}^{t} e_{i,j} \, 2^{i-1} \pmod{p-1}$$

an den Teilnehmer B.

Der Teilnehmer B prüft nun nach, ob der an ihn gesendete y-Wert auch die richtige Antwort auf die gestellte Frage ist, welche nämlich der Teilnehmer B durch Senden der Zufallsbitfolge e gestellt hat. Bei dieser Prüfung berechnet der Teilnehmer B den rechten Teil der folgenden Gleichung

$$x = 2^y \prod_{j=1}^{k} v_j^{\sum_{i=1}^{t} e_{i,j} 2^{i-1}} \pmod{p}$$

und stellt anhand eines Vergleichs fest, ob der errechnete Zahlenwert x mit dem bereits vorher vom Teilnehmer A erhaltenen x-Wert übereinstimmt. Dieser beim Teilnehmer B durchzuführende Rechenprozeß ist zwar relativ aufwendig, aber wegen der im Terminal in aller Regel ausreichend vorhandenen Rechnerleistung in relativ kurzer Zeit durchführbar. Damit ist die Identifikationsprüfung abgeschlossen, so daß, sofern beim Teilnehmer B eine Übereinstimmung der beiden x-Werte festgestellt worden ist, seitens des Teilnehmers A weitere Maßnahmen eingeleitet werden können.

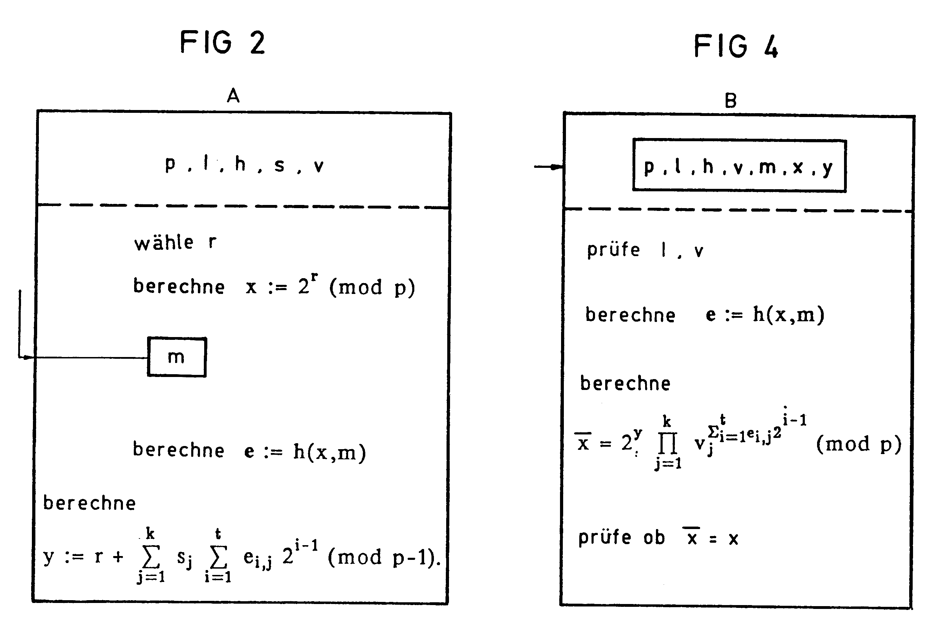

Die beschriebene Identifikation des Teilnehmers A kann durch Einbeziehen einer Nachricht m zu einer elektronisch erzeugten Unterschrift des Teilnehmers A unter die Nachricht m erweitert werden. Diese elektronische Unterschrift gestattet es, dem Teilnehmer B die Identität von A gegenüber einem Dritten, z.B. einem Richter nachzuweisen. Sie gestattet darüber hinaus den Nachweis, daß der Teilnehmer A zweifelsfrei die Nachricht m unterschrieben hat. Um unter Benutzung der beim Teilnehmer A, d.h. in der Chipkarte gespeicherten geheimen Schlüssel $s_j$ eine Nachricht m zu unterzeichnen, sind folgende Schritte auszuführen (siehe FIG 2):

1. Der Teilnehmer A wählt wieder eine Zufallszahl r und berechnet daraus, wie bereits im Zusammenhang mit der Identifikationsprüfung beschrieben, einen x-Wert gemäß der Beziehung

$x: = 2^r \pmod{p}$

Auch hier besteht selbstverständlich die Möglichkeit, auf den gespeicherten Vorrat zurückzugreifen und die Zufallszahlen r und den zugehörigen x-Wert unmittelbar abzurufen.

2. Der Teilnehmer A bildet nun einen Hashwert e aus der Nachricht m und dem ermittelten bzw. aus dem Vorrat entnommenen x-Wert gemäß der Beziehung

$e: = h(x,m) \in \{0,1\}^{kt}$

Dabei ist h eine öffentlich bekannte Hashfunktion mit Werten in $\{0,1\}^{kt}$.

3. Schließlich berechnet der Teilnehmer A aus den Komponenten: Geheimer Schlüssel $s_j$, Zufallsbitfolge bzw. Hashwert e und der Zufallszahl r einen y-Wert gemäß der Beziehung

$$y: = r + \sum_{j=1}^{k} s_j \sum_{i=1}^{t} e_{i,j} 2^{i-1} \pmod{p-1}$$

Das Zahlenpaar x, y ergibt sodann die sogenannte elektronische Unterschrift zur Nachricht m. Die beiden Sicherheitszahlen k und t liegen vorzugsweise im Bereich zwischen 1 und 20. Sie ergeben ein Sicherheitsniveau $2^{kt}$, das heißt wenigstens $2^{kt}$ Multiplikationen (modulo p) sind zur Fälschung der Unterschrift bzw. der Identität notwendig. Beispielsweise ergibt k = 4 und t = 18 ein für Unterschriften hinreichendes Sicherheitsniveau $2^{72}$.

Ausgehend von dieser durch die Zahlen x und y gebildeten Unterschrift, wobei beide Zahlen mindestens 512 Bit lang sind, ergeben sich verschiedene Möglichkeiten der Unterschriftenverkürzung. Eine der Möglichkeiten sieht vor, die Zahl x durch den Hashwert e = h(x,m) zu ersetzen, der nur 72 Bit lang ist. Die Unterschrift besteht dann nur noch aus y und e (siehe FIG 4). Ein nächster Schritt besteht darin, die Zahlen y, r, $s_j$ nicht mehr in der Größe des Moduls p zu nehmen, sondern für y, r, $s_j$ nur noch kleine Zahlen zu verwenden, die aber für das Sicherheitsniveau $2^{72}$ mindestens 140 Bit lang sind. Eine besonders einfache Möglichkeit, kurze Unterschriften zu erzielen, besteht darin, daß man den Primzahl-Modulus p so wählt, daß eine zweite Primzahl q den Wert (p-1) teilt, wobei q = 140 Bit lang ist. Man ersetzt dann die Basis 2 durch eine Zahl , so daß

$$\alpha^q = 1 \pmod{p}, \quad \alpha \neq 1 \pmod{p}$$

ist. Daraus folgt, daß alle diskreten Logarithmen modulo q berechnet werden können, d.h. man berechnet Logarithmen zu der gewählten Zahl $\alpha$ , wobei dann alle Logarithmen im Bereich von 1 bis q liegen. Dies hat den Vorteil, daß sich für den y-Wert der Unterschrift eine Zahl ergibt, die kleiner als q ist. Ausgehend von einer Zufallszahl r

$r \in \{1,...,q-1\}$,

dem daraus errechneten

$x : = \alpha^r \pmod{p}$

sowie der zufälligen Bitfolge

$e : = h(x,m) \in \{0,1\}^{kt}$

und der daraus errechneten Zahl y

$$y := r + \sum_{j=1}^{k} s_j \sum_{i=1}^{t} e_{i,j} 2^{i-1} \pmod{q}$$

ergibt sich für die nun aus den Zahlen y und e gebildete Unterschrift mit y = 140 Bits und e = 72 Bits insgesamt eine Länge von 212 Bits. Eine derart verkürzte Unterschrift hat das Sicherheitsniveau $2^{72}$, d.h. etwa $2^{72}$ Multiplikationen modulo p sind erforderlich, um eine Unterschrift zu fälschen.

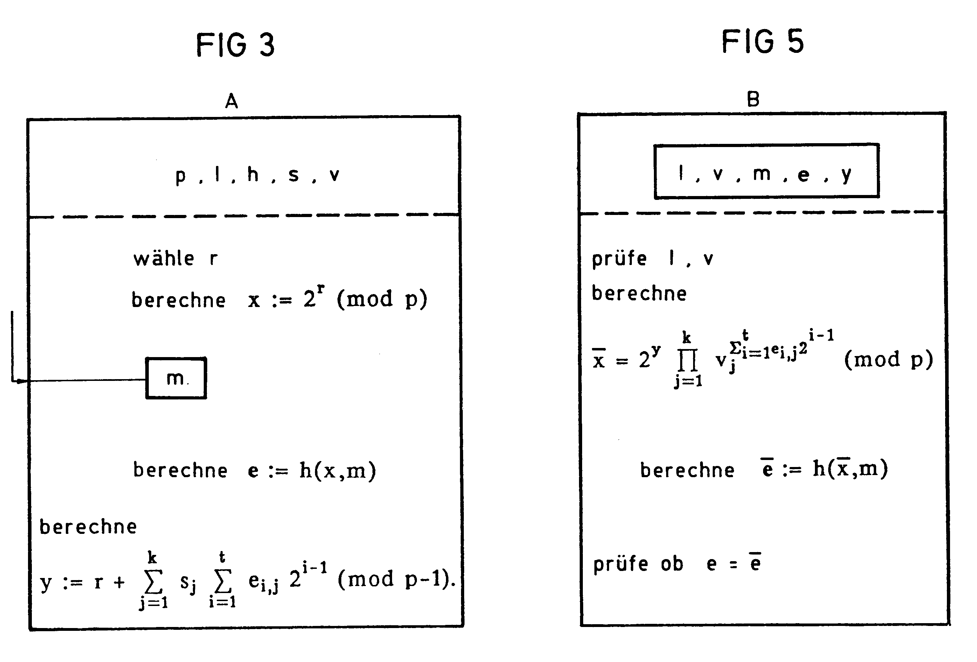

Zur Verifikation einer aus den Zahlen x, y bestehenden Unterschrift sind beim Teilnehmer B, d.h. im Terminal folgende Schritte vorgesehen. Zunächst wird, wie FIG 3 zeigt,

$e : = h(x,m) \in \{0,1\}^{kt}$

berechnet und dann der Gleichheitstest durchgeführt, derart, daß der gemäß der Beziehung

$$\overline{x} = 2^y \prod_{j=1}^{k} v_j^{\sum_{i=1}^{t} e_{i,j} 2^{i-1}} \pmod{p}$$

errechnete $\overline{x}$-Wert mit dem x-Wert der Unterschrift verglichen wird.

Bei verkürzten Unterschriften, bei denen x durch e ersetzt wird, erfolgt die Verifikation gemäß FIG 5 in der Weise, daß man zunächst

$$\overline{x} = 2^y \prod_{j=1}^{k} v_j^{\sum_{i=1}^{t} e_{i,j} 2^{i-1}} \pmod{p}$$

berechnet und dann prüft, ob die Zahl $\overline{x}$ den richtigen e-Wert liefert. Letzteres erfolgt dadurch, daß man prüft, ob der Hash-Wert $h(\overline{x},m)$ mit dem Wert e übereinstimmt.

Sowohl beim Identifikations- als auch beim Unterschriftenprotokoll sind in der Chipkarte nur relativ geringe Rechenleistungen zu erbringen. Bei der Berechnung der Zahl y sind zwar die geheimen Schlüssel $s_j$ noch mit relativ kleinen Zahlen zu multiplizieren, diese Multiplikation kann aber in einfache Additionen und Verschiebevorgänge, sogenannte Shifts, aufgelöst werden, wobei das Produkt aus $s_j$ und $e_{ij}$ nur um i-1 Positionen nach links geshiftet werden muß. Zu diesem Zwischenergebnis ist schließlich noch die Zufallszahl r durch Addition anzufügen.

Die Berechnung der Zahl

$$x := 2^r \ (\mathrm{mod}\ p)$$

ist zwar auch aufwendig, kann aber durch den bereits erwähnten Vorprozess vom Zeitaufwand her praktisch vernachlässigt werden, wenn für einige Zufallszahlen entsprechende x-Werte vorausberechnet und mehrere Paare, bestehend aus r- und x-Werten, als Vorrat abgespeichert werden.

Um zu verhindern, daß bei einer begrenzten Anzahl von Paaren in regelmäßigen Abständen immer wieder die gleichen Zahlenpaare verwendet werden, findet eine Erneuerung insofern statt, als jedes Paar nach der Benutzung anschließend mit anderen, gegebenenfalls allen Paaren des Vorrats kombiniert wird und zwar wieder auf zufällige Weise. Dies hat zur Folge, daß der Vorrat nach und nach immer wieder erneuert und verändert wird.

Als Beispiel für einen derartigen Erneuerungsprozeß sei angenommen, daß ein Vorrat von $\bar{k}$ Zahlenpaaren $(r_i, x_i)$ für $i = 1, \ldots, \bar{k}$ vorliegt. Um das Paar $(r_\nu, x_\nu)$ zu erneuern, wählt man zum Beispiel zufällige Indizes $a(1), \ldots, a(\bar{t} - 1) \in \{1, \ldots, \bar{k}\}$, sowie ein gerade erneuertes Paar $(r_\mu, x_\mu)$ und berechnet mit $a(\bar{t}) = $ das neue Paar $(r_\nu, x_\nu)$ nach der Vorschrift

$$r_\nu^{\mathrm{neu}} := r_\nu^{\mathrm{alt}} + \sum_{i=1}^{\bar{t}} r_{a(i)} \ (\mathrm{mod}\ p-1)$$

$$x_\nu^{\mathrm{neu}} := x_\nu^{\mathrm{alt}} \cdot \prod_{i=1}^{\bar{t}} x_{a(i)} \ (\mathrm{mod}\ p)$$

Für das neue Paar $(r_\nu, x_\nu)$ gilt wieder die Beziehung

$$x = 2^{r_\nu} \ (\mathrm{mod}\ p).$$

Die neue Zahl $r_\nu$ kann man mit $\bar{t}$ Additionen, die neue Zahl $x_\nu$ mit $\bar{t}$ Multiplikationen berechnen. Eine andere Erneuerung des Paares $(r_\nu, x_\nu)$ ist möglich nach der Vorschrift

$$r_\nu^{\mathrm{neu}} := r_\nu^{\mathrm{alt}} + \sum_{i=1}^{\bar{t}} r_{a(i)} \ 2^i \ (\mathrm{mod}\ p-1)$$

$$x_\nu^{\mathrm{neu}} := x_\nu^{\mathrm{alt}} \cdot \prod_{i=1}^{\bar{t}} x_{a(i)}^{2^i} \ (\mathrm{mod}\ p).$$

Die Berechnung des neuen Wertes $r_\nu$ geht hier in $\bar{t}$ Additionen und $\bar{t}$ Shifts. Die neue Zahl $x_\nu$ kann man mit $2\bar{t}$ Multiplikationen berechnen. Hierzu führt man beginnend mit $z = 1$ die Schritte

$$z := z\, x_{a(i)} \ (\mathrm{mod}\ p), \quad z := z^2 \ (\mathrm{mod}\ p),$$

mit von $\bar{t}$ nach 1 absteigendem Index i durch.

Den neuen Wert x erhält man als Produkt des alten Wertes mit der zuletzt berechneten Zahl z, also nach der Vorschrift

$$x_\nu^{neu} := x_\nu^{alt} \quad z \ (mod \ p).$$

Bei dieser Erneuerung hat die Wahl $a(\bar{t}) = \mu$ zur Folge, daß eine gerade erneuerte Zahl $r_\mu$ mit der höchsten 2er-Potenz multipliziert wird. Dies führt zu einer besonders effektiven Erneuerung des Vorrats. Es ist zweckmäßig, für die Unterschrift ein Paar (r, x) zu verwenden, das als zufällige Kombination der gerade gespeicherten Paare gebildet wird. Gut geeignet sind Zwischenwerte, die bei der Erneuerung von $r_\nu$, $x_\nu$ ohnehin anfallen.

Selbstverständlich kann man diese Erneuerungsprozesse für das Paar $(r_\nu, x_\nu)$ kombinieren und variieren. Es kommt nur darauf an, daß die Erneuerung möglichst schnell geht und aus den geleisteten Unterschriften nicht nachvollziehbar ist. Man benutzt also zweckmäßig eine kleine Zahl $\bar{t}$; die Erneuerung bleibt unausforschbar, wenn der Vorrat an Zahlenpaaren - also die Zahl $\bar{k}$ - hinreichend groß ist. Es ist vorteilhaft, die Schlüsselpaare $s_j$, $v_j$ bei der Erneuerung mit zu benutzen; man kann zum Beispiel für ein Paar $(r_{a(i)}, x_{a(i)})$ ein Schlüsselpaar $(s_j, v_j)$ wählen. Bei $\bar{t} = 6$ und $\bar{k} = 10$ braucht die Erneuerung eines Schlüsselpaares nur 6 bzw. 12 Multiplikationen, die mehr oder weniger nebenbei durchgeführt werden können, z.B. dann, wenn im Terminal andere Rechenoperationen auszuführen sind.

Die vielfältigen Möglichkeiten, die Zahlenpaare $(r_\nu, x_\nu)$ zu erneuern, können in jeder Chipkarte anders genutzt werden. Zum Beispiel können die Indizes a(1), ..., a($\bar{t}$ - 1) und die Kombinationen der Schlüsselpaare des Vorrats in jeder Chipkarte anders gebildet werden. Auf diese Weise wird ein Ausforschen des Erneuerungsprozesses praktisch unmöglich.

Im Falle der verkürzten Unterschrift müssen die Zufallszahlen $r_i$ klein sein, damit auch der y-Teil der Unterschrift klein bleibt. Dies erreicht man einfach dadurch, daß man für die diskreten Logarithmen eine Basis $\alpha$ wählt, für die es eine 140 Bit lange Primzahl q gibt, so daß $\alpha^q = 1$ mod p. Bei der Erneuerung der Zufallszahlen $r_i$ wird dann natürlich modulo q gerechnet, d.h. es wird der Modul p-1 durch den Modul q ersetzt.

**Patentansprüche**

1.  Verfahren zur gegenseitigen Identifikation von Teilnehmern in einem mit Prozessor-Chipkarten arbeitenden Datenaustauschsystem, unter Verwendung von in einem Zentrum jeweils mit teilnehmerbezogenen öffentlichen Schlüsseln verschlüsselten und in der jeweiligen Chipkarte gespeicherten Identifikationsdaten und mit diesen öffentlichen Schlüsseln in logischem Zusammenhang stehenden Geheimschlüsseln, bei dem wechselseitig zwischen den Teilnehmern zufallszahlenabhängige Prüfdaten ausgetauscht werden,

    **gekennzeichnet durch** folgende Schritte:

    a) Die Chipkarte sendet die verschlüsselten Identifikationsdaten (I, v), gegebenenfalls zusammen mit einer Unterschrift des Zentrums an den mit der Chipkarte in einen Informationsaustausch eintretenden Teilnehmer, der die Korrektheit der verschlüsselten Identifikationsdaten (I, v) anhand einer öffentlichen Liste oder der Unterschrift des Zentrums prüft,

    b) die Chipkarte bildet, ausgehend von einem zufälligen diskreten Logarithmus r∈(1,...,p-1), wobei p ein vereinbarter Primzahl-Modulus ist, einen x-Wert gemäß der Vorschrift

    x: = $2^r$ (mod p)

    und sendet diesen x-Wert an den Teilnehmer

    c) der Teilnehmer sendet eine zufällige Bitfolge

    e = $(e_{1,1},...,e_{t,k}) \in \{0,1\}^{kt}$

    an die Chipkarte

    d) die Chipkarte berechnet durch Multiplikation der gespeicherten, ebenfalls einen diskreten Logarithmus darstellenden geheimen Schlüssel $s_j$ mit einer aus den Bits der vom Teilnehmer zur Chipkarte übertragenen zufälligen Bitfolge e gebildeten Dualzahl und durch Addition der dem vorher übertragenen x-Wert zugeordneten Zufallszahl r eine Zahl y gemäß der Vorschrift

$$y := r + \sum_{j=1}^{k} s_j \sum_{i=1}^{t} e_{i,j} \; 2^{i-1} \pmod{p-1}$$

und überträgt diese Zahl y zum Teilnehmer

e) der Teilnehmer berechnet anhand der ihm übertragenen Zahl y eine Zahl x nach der Vorschrift

$$x = 2^y \prod_{j=1}^{k} v_j^{\sum_{i=1}^{t} e_{i,j} 2^{i-1}} \pmod{p}$$

und prüft die Identität des Chipkarten-Benutzers anhand eines Vergleichs zwischen der errechneten Zahl x und dem ihm vorher übermittelten x-Wert.

2. Verfahren zur Erzeugung von Unterschriften für eine zu übertragende Nachricht in einem mit Prozessor-Chipkarten arbeitenden Datenaustauschsystem, unter Verwendung von in einem Zentrum jeweils mit teilnehmerbezogenen öffentlichen Schlüsseln verschlüsselten und in der jeweiligen Chipkarte gespeicherten Identifikationsdaten und mit diesen öffentlichen Schlüsseln in logischem Zusammenhang stehenden Geheimschlüsseln, bei dem wechselseitig zwischen den Teilnehmern zufallszahlenabhängige Prüfdaten ausgetauscht werden,
**gekennzeichnet durch** folgende Schritte:
   a) Die Chipkarte berechnet aus einer in der Chipkarte erzeugten, im Bereich zwischen 1 und dem Primzahl-Modulus (p-1) liegenden Zufallszahl r einen x-Wert gemaß der Vorschrift

x: = $2^r$ (mod p)

   b) die Chipkarte berechnet als Funktion des x-Wertes, der Nachricht m und einer vereinbarten Hashfunktion h eine zufällige Bitfolge gemäß der Vorschrift

e: = h(x,m)∈$\{0,1\}^{kt}$

   c) die Chipkarte berechnet aus der Zufallszahl r, den in der Chipkarte gespeicherten Geheimschlüsseln $s_j$ und der zufälligen Bitfolge e einen y-Wert gemäß der Vorschrift

$$y := r + \sum_{j=1}^{k} s_j \sum_{i=1}^{t} e_{i,j} 2^{i-1} \pmod{p-1}$$

   d) die Chipkarte sendet die Nachricht m und die aus den Werten x und y gebildete Unterschrift an den mit ihr im Nachrichtenaustausch stehenden Teilnehmer.

3. Verfahren zur Erzeugung einer verkürzten Unterschrift für eine zu übertragende Nachricht in einem mit Prozessor-Chipkarten arbeitenden Datenaustauschsystem, unter Verwendung von in einem Zentrum jeweils mit teilnehmerbezogenen öffentlichen Schlüsseln verschlüsselten und in der jeweiligen Chipkarte gespeicherten Identifikationsdaten und mit diesen öffentlichen Schlüsseln in logischem Zusammenhang stehenden Geheimschlüsseln, bei dem wechselseitig zwischen den Teilnehmern zufallszahlenabhängige Prüfdaten ausgetauscht werden,
**gekennzeichnet durch** folgende Schritte:
   a) Die Chipkarte berechnet aus einer in der Chipkarte erzeugten, im Bereich zwischen 1 und dem Primzahl-Modulus (p-1) liegenden Zufallszahl r einen x-Wert nach der Vorschrift

$$x: = 2^r \pmod{p}$$

b) die Chipkarte berechnet als Funktion vom x-Wert und der Nachricht m eine zufällige Bitfolge e gemäß der Vorschrift

$$e: = h(x,m) \in \{0,1\}^{kt}$$

c) die Chipkarte berechnet aus der Zufallszahl r, aus den geheimen Schlüsseln $s_j$ und aus der Zufallsbitfolge e einen y-Wert gemäß der Vorschrift

$$y: = r + \sum_{j=1}^{k} s_j \sum_{i=1}^{t} e_{i,j} 2^{i-1} \pmod{p-1}$$

d) die Chipkarte sendet die Nachricht m und die aus den Werten e und y gebildete Unterschrift an den mit ihr im Nachrichtenaustausch stehenden Teilnehmer.

4. Verfahren nach einem der vorhergehenden Ansprüche,
**dadurch gekennzeichnet,** daß in der Chipkarte mehrere Zufallszahlen r und jeweils zugehörige in einem Vorprozeß berechnete x-Werte paarweise abgespeichert werden, daß das bei einer Identifikations- und/oder Unterschriften-Prozedur verwendete Paar (r, x) in der Weise verändert wird, daß eine Zufallszahl r nach Benutzung mit einer zufälligen Auswahl der übrigen gespeicherten Zufallszahlen kombiniert wird und daß zur erneuerten Zufallszahl der zugehörige x-Wert berechnet und zusammen mit der erneuerten Zufallszahl r als erneuertes Paar abgespeichert und/oder benutzt wird.

5. Verfahren nach Anspruch 4,
**dadurch gekennzeichnet,** daß in der Chipkarte mehrere Zufallszahlen $r_1, ..., r_k$ und ihre zugehörigen x-Werte,

$$x_\nu = 2^{r_\nu} \pmod{p}$$

abgespeichert werden und daß das bei einer Identifikations- und/oder Unterschriften-Prozedur verwendete Paar (r, x) durch eine zufällige Auswahl $(r_{a(i)}, x_{a(i)})$ für $i = 1, ..., \bar{t}$ der Paare wie folgt erneuert wird

$$r_\nu^{neu} : = r_\nu^{alt} + \sum_{i=1}^{\bar{t}} r_{a(i)} 2^i \pmod{p-1}$$

$$x_\nu^{neu} : = x_\nu^{alt} \cdot \prod_{i=1}^{\bar{t}} x_{a(i)}^{2^i} \pmod{p}$$

6. Verfahren nach einem der vorhergehenden Ansprüche,
**gekennzeichnet durch** eine derartige Wahl des Primzahl-Modulus p, daß (p-1) durch eine Primzahl q teilbar ist und durch eine derartige Wahl der Basis $\alpha$ des diskreten Logarithmus, daß

$$\alpha^q = 1 \pmod{p}, \alpha \not\equiv 1 \pmod{p}$$

ist, daß die diskreten Logarithmen y, r, $s_j$ modulo q berechnet werden und daß die Schlüsselkomponenten $s_j$ und $v_j$ in der Beziehung $v_j = \alpha^{-s_j} \pmod{p}$ stehen.

7.  Verfahren nach einem der vorhergehenden Ansprüche,
    **gekennzeichnet durch** eine derartige Wahl der geheimen Schlüssel ($s_j$) und der Zufallszahlen (r), daß die Bitlängen der Zahlen $s_j$, r und y kürzer als die volle Länge des Primzahl-Modulus p sind.

8.  Verfahren nach einem der vorhergehenden Ansprüche,
    **dadurch gekennzeichnet,** daß anstelle der endlichen Gruppen, die durch Restklassenbildung modulo p entstehen, andere endliche Gruppen zur Bildung des diskreten Logarithmus verwendet werden.

9.  Verfahren nach Anspruch 8,
    **dadurch gekennzeichnet,** daß als endliche Gruppe eine Einheitengruppe $\mathbb{Z}^*_n$ der zur Zahl n primen Restklassen, eine Einheitengruppe eines endlichen Körpers, eine elliptische Kurve über einem endlichen Körper oder dergleichen vorgesehen sind.

10. Verfahren zur Verifikation einer nach dem Verfahren gemäß Anspruch 2 erzeugten Unterschrift (x, y) beim die unterschriebene Nachricht m empfangenden Teilnehmer,
    **gekennzeichnet durch** folgende Schritte:
    a) Aus der Nachricht m und dem x-Wert der Unterschrift wird eine zufällige Bitfolge e gemäß der Vorschrift berechnet

    $$e := h(x,m) \in \{0,1\}^{kt}$$

    b) aus der zufälligen Bitfolge e, dem öffentlichen Schlüssel v und dem y-Wert der Unterschrift wird ein $\bar{x}$-Wert gemäß der Vorschrift

    $$\bar{x} = 2^y \prod_{j=1}^{k} v_j^{\sum_{i=1}^{t} e_{i,j} 2^{i-1}} \pmod{p}$$

    berechnet und geprüft, ob der berechnete $\bar{x}$-Wert mit dem x-Wert der Unterschrift übereinstimmt.

11. Verfahren zur Verifikation einer nach dem Verfahren gemäß Anspruch 3 erzeugten, verkürzten Unterschrift beim die unterschriebene Nachricht m empfangenden Teilnehmer,
    **gekennzeichnet durch** folgende Schritte:
    a) Aus der übertragenen Nachricht m und der Unterschrift (e,y) wird eine Zahl $\bar{x}$ gemäß der Vorschrift berechnet

    $$\bar{x} = 2^y \prod_{j=1}^{k} v_j^{\sum_{i=1}^{t} e_{i,j} 2^{i-1}} \pmod{p}$$

    b) Es wird geprüft, ob der e-Wert der Unterschrift übereinstimmt mit $h(\bar{x},m)$.

**Claims**

1. Method for mutual identification of subscribers in a data exchange system working by means of processor chip cards and using identification data which are coded in a centre by means of respective subscriber-related public keys and are stored in the respective chip card and using private keys which are in logical relationship with those public keys, in which method random-number-dependent check data are reciprocally exchanged between the subscribers, characterized by the following steps:

a) the chip card transmits the coded identification data (I, v), if necessary together with a signature of the centre, to the subscriber entering into an information exchange by means of a chip card, which subscriber checks the correctness of the coded identification data (I, v) with the help of a public list or the signature of the centre;

b) proceeding from a random discrete logarithm $r \in (1,..., p-1)$, p being a specified prime number modulus, the chip card forms an x value according to the rule

$$x := 2^r \pmod{p}$$

and transmits this x value to the subscriber;

c) the subscriber transmits a random bit sequence

$$e = (e_{1,1},..., e_{t,k}) \in \{0,1\}^{kt}$$

to the chip card;

d) the chip card calculates a number y by multiplying the stored private keys $s_j$, likewise representing a discrete logarithm, by a binary number formed from the bits of the random bit sequence e transmitted from the subscriber to the chip card and adding the random number r allocated to the previously transmitted x value according to the rule

$$y := r + \sum_{j=1}^{k} s_j \sum_{i=1}^{t} e_{i,j} \, 2^{i-1} \pmod{p-1}$$

and transmits this number y to the subscriber;

e) with the help of the number y transmitted to him, the subscriber calculates a number x according to the rule

$$x = 2^y \prod_{j=1}^{k} v_j^{\sum_{i=1}^{t} e_{i,j} 2^{i-1}} \pmod{p}$$

and checks the identity of the chip card user by comparing the calculated number x and the x value previously transmitted to him.

2. Method for generating signatures for a message to be transmitted in a data exchange system working by means of processor chip cards and using identification data which are coded in a centre by means of respective subscriber-related public keys and are stored in the respective chip card and using private keys which are in logical relationship with these public keys, in which method random-number-dependent check data are reciprocally exchanged between the subscribers, characterized by the following steps:

a) the chip card calculates an x value from a random number r generated in the chip card and being within the range of between 1 and the prime number modulus (p-1) according to the rule

$$x := 2^r \pmod{p}$$

b) the chip card calculates a random bit sequence as a function of the x value, the message m and a specified hash function h according to the rule

$e := h(x,m) \in \{0,1\}^{kt}$

c) the chip card calculates a y value from the random number r, the private keys $s_j$ stored in the chip card and the random bit sequence e according to the rule

$$y := r + \sum_{j=1}^{k} s_j \sum_{i=1}^{t} e_{i,j} 2^{i-1} \pmod{p-1}$$

d) the chip card transmits the message m and the signature formed by the values x and y to the subscriber who is in information exchange with this card.

3. Method for generating an abbreviated signature for a message to be transmitted in a data exchange system working by means of processor chip cards and using identification data which are coded in a centre by means of respective subscriber-related public keys and are stored in the respective chip card and using private keys which are in logical relationship with these public keys, in which method random-number-dependent chock data are reciprocally exchanged between the subscribers, characterized by the following steps:

a) the chip card calculates an x value from a random number r generated in the chip card and being within the range of between 1 and the prime number modulus (p-1) according to the rule

$x := 2^r \pmod{p}$

b) the chip card calculates a random bit sequence e as a function of the x value and the message m according to the rule

$e := h(x,m) \in \{0,1\}^{kt}$

c) the chip card calculates a y value from the random number r, the private keys $s_j$ and the random bit sequence e according to the rule

$$y := r + \sum_{j=1}^{k} s_j \sum_{i=1}^{t} e_{i,j} 2^{i-1} \pmod{p-1}$$

d) the chip card transmits the message m and the signature formed by the values e and y to the subscriber who is in information exchange with this card.

4. Method according to one of the preceding claims, characterized in that in the chip card a plurality of random numbers r and respectively associated x values calculated in a prior process are stored in pairs, in that the pair (r, x) employed in an identification and/or signature procedure is varied in such a manner that a random number r is combined after use with a random selection of the remaining random numbers stored, and that the x value corresponding to the renewed random number r is calculated and stored and/or used in conjunction with the renewed random number r as a renewed pair.

5. Method according to Claim 4, characterized in that a plurality of random numbers $r_1,... r_k$ and their associated x values, $x_\nu = 2^{r_\nu} \pmod{p}$ are stored in the chip card and in that the pair (r, x) employed in an identification and/or signature procedure is renewed by a random selection $(r_{a(i)}, x_{a(i)})$ of the pairs for $i = 1,..., \bar{t}$ as follows

$$r_\nu^{neu} \; := \; r_\nu^{alt} \; + \sum_{i=1}^{\bar{t}} \; r_{a(i)} \; 2^i \; (mod \; p-1)$$

$$x_\nu^{neu} \; := \; x_\nu^{alt} \; \cdot \prod_{i=1}^{\bar{t}} \; x_{a(i)}^{2^i} \; (mod \; p)$$

**[neu -> new, alt -> old]**

6. Method according to one of the preceding claims, characterized by a choice of the prime number modulus p such that (p-1) is divisible by a prime number q and by a selection of the base $\alpha$ of the discrete logarithm such that

$\alpha^q = 1 \; (mod \; p), \; \alpha \neq 1 \; (mod \; p)$

that the discrete logarithms y, r, $s_j$ in modulo q are calculated and that the key components $s_j$ and $v_j$ are in the relationship $v_j = \alpha^{-s_j} \; (mod \; p)$.

7. Method according to one of the preceding claims, characterized by a choice of the private keys ($s_j$) and the random numbers (r) such that the bit lengths of the numbers $s_j$, r, and y are shorter than the full length of the prime number modulus p.

8. Method according to one of the preceding claims, characterized in that for the formation of the discrete logarithm other finite groups are used instead of the finite groups which arise from the formation of residue class modulo p.

9. Method according to Claim 8, characterized in that a unit group Z*n of the residue classes relatively prime to the number n, a unit group of a finite field, an elliptic curve over a finite field or the like are provided as finite group.

10. Method for verification of a signature (x, y) generated in accordance with the method of Claim 2 at the subscriber receiving the signed message m, characterized by the following steps:
a) a random bit sequence e is calculated from the message m and the x value of the signature according to the rule

e: $= h(x,m) \in \{0,1\}^{kt}$

b) an x value is calculated from the random bit sequence e, the public key v and the y value of the signature according to the rule

$$\bar{x} \; = \; 2^y \prod_{j=1}^{k} \; v_j^{\sum_{i=1}^{t} e_{i,j} \, 2^{i-1}} \; (mod \; p)$$

and it is checked whether the calculated $\bar{x}$ value coincides with the x value of the signature.

**11.** Method for verification of an abbreviated signature generated in accordance with the method of Claim 3 at the subscriber receiving the signed message m, characterized by the following steps:

a) a number $\bar{x}$ is calculated from the transmitted message m and the signature (e, y) according to the rule

$$\bar{x} = 2^y \prod_{j=1}^{k} v_j^{\sum_{i=1}^{t} e_{i,j} 2^{i-1}} \pmod{p}$$

b) it is checked whether the e value of the signature coincides with $h(\bar{x},m)$.

**Revendications**

**1.** Procédé pour l'identification réciproque d'abonnés dans un système d'échange de données opérant avec des cartes à puce à microprocesseur, moyennant l'utilisation de données d'identification codées respectivement dans un centre avec des codes publics rapportés aux abonnés, et mémorisées dans la carte à puce concernée, et avec des codes secrets, qui sont liés selon une association logique à ces codes publics, et selon lequel des données de contrôle, qui dépendent de nombres aléatoires, sont échangées alternativement entre les abonnés,

caractérisé par les étapes suivantes

a) la carte à puce envoie les données d'identification codées (I, v), éventuellement en association avec une signature du centre, à l'abonné qui exécute un échange d'informations avec la carte à puce et qui vérifie le caractère correct des données d'identification codée (I, v) sur la base d'une liste publique ou de la signature du centre,

b) la carte à puce forme, à partir d'un logarithme aléatoire discret $r \in (1,...,p-1)$, p étant un module de nombre primaire pouvant être convenu, une valeur x conformément à la formule

$$x: = 2^r \pmod{p}$$

et envoie cette valeur x à l'abonné,

c) l'abonné envoie une suite binaire aléatoire

$$e = (e_{1,1},...,e_{t,k}) \in \{0,1\}^{kt}$$

à la carte à puce,

d) la carte à puce calcule, par multiplication des codes secrets mémorisés $(s_j)$, qui représentent également un logarithme discret, avec un nombre binaire formé à partir des bits de la suite binaire aléatoire e transmise par l'abonné à la carte à puce, et par addition du nombre aléatoire r associé à la valeur x transmise auparavant, un nombre y conformément à la formule

$$y: = r + \sum_{j=1}^{k} s_j \sum_{i=1}^{t} e_{i,j} 2^{i-1} \pmod{p-1}$$

et transmet ce nombre y à l'abonné,

e) l'abonné calcule, sur la base du nombre y qui lui est transmis, un nombre x correspondant à la formule

$$x = 2^y \prod_{j=1}^{k} v_j \sum_{i=1}^{t} e_{i,j} 2^{i-1} \pmod{p}$$

et contrôle l'identité de l'utilisateur de la carte à puce sur la base d'une comparaison entre le nombre calculé x et la valeur x qui lui a été transmise auparavant.

2. Procédé pour produire des signatures pour une information devant être transmise dans un système d'échange de données opérant avec des cartes à puce à processeur, moyennant l'utilisation de données d'identification codées respectivement dans un centre avec des codes publics rapportés aux abonnés, et mémorisées dans la carte à puce concerné, et avec des codes secrets, qui sont liés selon une association logique à ces codes publics, et selon lequel des données de contrôle, qui dépendent de nombres aléatoires, sont échangées alternativement entre les abonnés, caractérise par les étapes suivantes :

a) la carte à puce calcule, à partir d'un nombre aléatoire r, qui est produit dans la carte à puce et se situe dans la gamme comprise entre 1 et le module de nombre primaire (p-1), une valeur x correspondant à la formule

$x := 2^r \ (\text{modulo } p)$

b) la carte à puce calcule en fonction d'une valeur x, de l'information m et d'une fonction Hash h convenue, une suite binaire aléatoire conformément à la formule

$e := h(x,m) \in \{0,1\}^{kt}$

c) la carte à puce calcule, à partir du nombre aléatoire r, des codes secrets $s_j$ mémorisés dans la carte à puce et de la suite binaire aléatoire e, une valeur y conformément à la formule

$$y := r + \sum_{j=1}^{k} s_j \sum_{i=1}^{t} e_{i,j} 2^{i-1} \ (\text{modulo } p-1)$$

d) la carte à puce envoie l'information m et la signature formée à partir des valeurs x et y, à l'abonné qui échange des informations avec elle.

3. Procédé pour produire une signature raccourcie pour une information devant être transmise dans un système d'échange de données opérant avec des cartes à puce à processeur, moyennant l'utilisation de données d'identification codées respectivement dans un centre avec des codes publics rapportés aux abonnés, et mémorisées dans la carte à puce concernée, et avec des codes secrets, qui sont liés selon une association logique à ces codes publics, et selon lequel des données de contrôle, qui dépendent de nombres aléatoires, sont échangées alternativement entre les abonnés, caractérisé par les étapes suivantes :

a) la carte à puce calcule, à partir d'un nombre aléatoire r, qui est produit dans la carte à puce et se situe dans la gamme comprise entre 1 et le module de nombre primaire (p-1), une valeur x correspondant à la formule

$x := 2^r \ (\text{modulo } p)$

b) la carte à puce calcule en fonction de la valeur x et de l'information m, une suite binaire aléatoire e conformément à la formule

$e := h(x,m) \in \{0,1\}^{kt}$

c) la carte à puce calcule à partir du nombre aléatoire r, à partir des codes secrets $s_j$ et à partir de la suite binaire aléatoire e, une valeur y correspondant à la formule

16

$$y: = r + \sum_{j=1}^{k} s_j \sum_{i=1}^{t} e_{i,j} \, 2^{i-1} \ (\text{modulo } p-1)$$

d) la carte à puce envoie l'information m et la signature formée à partir des valeurs e et y, à l'abonné qui échange des informations avec elle.

4. Procédé suivant l'une des revendications précédentes, caractérisé par le fait que dans la carte à puce, plusieurs nombres aléatoires r et des valeurs x respectivement associées, calculées lors d'un processus antérieur, sont mémorisés par couples, que le couple (r, x), qui est utilisé dans une procédure d'identification et/ou de signature est modifié de telle sorte qu'un nombre aléatoire r est combiné, après utilisation, à une sélection aléatoire des autres nombres aléatoires mémorisés, et que pour le nouveau nombre aléatoire, la valeur x associée est calculée et est mémorisée et/ou utilisée, conjointement avec le nouveau nombre aléatoire r, en tant que nouveau couple.

5. Procédé suivant la revendication 4, caractérisé par le fait que dans la carte à puce, plusieurs nombres aléatoires $r_1,...,r_k$ et les valeurs x qui leur sont associées, $x_\nu = 2^{r_\nu}$ (modulo p), sont mémorisées et que le couple (r, x), utilisé lors d'une procédure d'identification et/ou de signature, est régénéré comme suit, au moyen d'un choix aléatoire $(r_{a(i)}, x_{a(i)}$ pour $i = 1,...,\bar{t})$ des couples

$$r_\nu^{\text{nouveau}} : = r_\nu^{\text{ancien}} + \sum_{i=1}^{\bar{t}} r_{a(i)} \, 2^i \ (\text{modulo } p-1)$$

$$x_\nu^{\text{nouveau}} : = x_\nu^{\text{ancien}} + \prod_{i=1}^{\bar{t}} x_{a(i)}^{2^i} \ (\text{modulo } p)$$

6. Procédé suivant l'une des revendications précédentes, caractérisé par un tel nombre du module de nombre primaire p, que (p-1) est divisible par un nombre primaire q, et par un logarithme tel de base $\alpha$ du logarithme discret, que l'on a

$\alpha^q = 1$ (modulo p), $\alpha \neq 1$ (modulo p)

que les logarithmes discrets y, r, $s_j$ sont calculés modulo q et que les composantes de code $s_j$ et $v_j$ sont liées par la relation $v_j = \alpha^{-s_j}$ (modulo p).

7. Procédé suivant l'une des revendications précédents, caractérisé par un choix tel des codes secrets $(s_j)$ et des nombres aléatoires (r), que les longueurs en bits des nombres $s_j$, r et y sont inférieures à la longueur totale du module p du nombre primaire.

8. Procédé suivant l'une des revendications précédentes, caractérisé par le fait que sur la base des groupes finals, qui apparaissent par formation des classes restantes modulo p, on utilise d'autres groupes finals pour former le logarithme discret.

9. Procédé suivant la revendication 8, caractérisé par le fait qu'il est prévu, comme groupe final, un groupe d'unités $\mathbb{Z}_n^*$ des classes restantes premières avec le nombre n, un groupe d'unités d'un corps final, une courbe elliptique par-dessus un corps final ou analogue.

10. Procédé pour vérifier une signature (x, y) conformément au procédé suivant la revendication 2, dans le cas de l'abonné recevant l'information signée m, caractérisé par les étapes suivantes :

**EP 0 384 475 B1**

a) une suite binaire aléatoire e est calculée, à partir de l'information m et de la valeur x de la signature, conformément à la formule

e: = $h(x,m) \in \{0,1\}^{kt}$

b) une valeur $\overline{x}$ est calculée à partir de la suite binaire aléatoire e, du code public v et de la valeur y de la signature, conformément à la relation

$$\overline{x} = 2^Y \prod_{j=1}^{k} v_j \sum_{i=1}^{t} e_{i,j} 2^{i-1} \pmod{p}$$

et vérifiée pour savoir si la valeur $\overline{x}$ calculée coïncide avec la valeur x de la signature.

**11.** Procédé pour vérifier une signature raccourcie, produite conformément au procédé suivant la revendication 3, chez l'abonné qui reçoit l'information signée m,
caractérisé par les étapes suivantes
   a) un nombre $\overline{x}$ est calculé à partir de l'information transmise m et de la signature (e, y) conformément à la formule

$$\overline{x} = 2^Y \prod_{j=1}^{k} v_j \sum_{i=1}^{t} e_{i,j} 2^{i-1} \pmod{p}$$

   b) on vérifie si la valeur e de la signature coïncide avec $h(\overline{x},m)$.

18

# FIG 1

EP 0 384 475 B1

**A**

$$p \; , \; l \; , \; s \; , \; v$$

wähle   r

berechne   $x := 2^r \pmod p$

berechne

$$y := r + \sum_{j=1}^{k} s_j \sum_{i=1}^{t} e_{i,j} \, 2^{i-1} \pmod{p-1}.$$

**B**

l , v →

prüfe   l , v

x →

e ←

wähle e

prüfe , ob

y →

$$x = 2^y \prod_{j=1}^{k} v_j^{\sum_{i=1}^{t} e_{i,j} 2^{i-1}} \pmod p$$

# FIG 2

## A

$p\,,\,l\,,\,h\,,\,s\,,\,v$

---

wähle $r$

berechne $x := 2^r \pmod{p}$

$\boxed{m}$

berechne $e := h(x,m)$

berechne

$$y := r + \sum_{j=1}^{k} s_j \sum_{i=1}^{t} e_{i,j}\, 2^{i-1} \pmod{p-1}.$$

# FIG 4

## B

$\boxed{p\,,\,l\,,\,h\,,\,v\,,\,m\,,\,x\,,\,y}$

---

prüfe $l\,,\,v$

berechne $e := h(x,m)$

berechne

$$\overline{x} = 2^y \prod_{j=1}^{k} v_j^{\Sigma_{i=1}^{t} e_{i,j} 2^{i-1}} \pmod{p}$$

prüfe ob $\overline{x} = x$

EP 0 384 475 B1

## FIG 3

### A

$$p , l , h , s , v$$

- - - - - - - - - - - - - - - - - - - - - - - -

wähle r

berechne $\quad x := 2^r \pmod{p}$

$$\boxed{m}$$

berechne $\quad e := h(x,m)$

berechne

$$y := r + \sum_{j=1}^{k} s_j \sum_{i=1}^{t} e_{i,j}\, 2^{i-1} \pmod{p-1}.$$

## FIG 5

### B

$$\boxed{l , v , m , e , y}$$

- - - - - - - - - - - - - - - - - - - - - - - -

prüfe l , v

berechne

$$\overline{x} = 2^y \prod_{j=1}^{k} v_j^{\sum_{i=1}^{t} e_{i,j} 2^{i-1}} \pmod{p}$$

berechne $\quad \overline{e} := h(\overline{x},m)$

prüfe ob $\quad e = \overline{e}$

EP 0 384 475 B1